# EUROPEAN PATENT SPECIFICATION

(11) **EP 2 575 289 B1**
(45) Date of publication and mention of the grant of the patent: **31.12.2014**
(21) Application number: 12175417.0
(22) Date of filing: 06.07.2012
(51) Int. Cl.: H04L 12/12, H04L 12/28, G01D 4/00, G05D 23/19, H02J 13/00, G08C 17/00

(54) **Electronic apparatus and computer program**
Elektronische Vorrichtung und Computerprogramm
Appareil électronique et programme informatique

(30) Priority: 30.09.2011 JP 2011217757
(43) Date of publication of application: 03.04.2013
(73) Proprietor: Kabushiki Kaisha Toshiba, Tokyo 105-8001 (JP)
(72) Inventor: Okuyama, Takehiko, Tokyo, 105-8001 (JP); Yogo, Masashige, Tokyo, 105-8001 (JP); Sekiguchi, Tomoko, Tokyo, 105-8001 (JP)
(74) Representative: Henkel, Breuer & Partner

(56) References cited:
- EP-A1- 2 081 097
- WO-A1-2007/048823
- WO-A1-2009/025499
- US-A1- 2010 163 633
- GENTA SUZUKI ET AL: "u-Photo : Ubiquitous Environmental Snapshot Capturing Contextual Information in Home Network Environment", IPSJ SIG NOTES, vol. 63, no. 2004, 17 June 2004 (2004-06-17), pages 65-72, XP055050750, http://ci.nii.ac.jp "NII Library Services" http://ci.nii.ac.jp/els/110002913946.pdf?i d=ART0003261600&type=pdf&lang=en&host=cini i&order_no=&ppv_type=0&lang_sw=&no=1358877 883&cp= ISSN: 0919-6072
- Naohiko Kohtake ET AL: "u-Photo: A Snapshot-based Interaction Technique for Ubiquitous Embedded Information", Video Proceedings of the Second International Conference on Pervasive Computing(Pervasive 2004), 1 January 2004 (2004-01-01), XP055050751, Retrieved from the Internet: URL:http://www.ht.sfc.keio.ac.jp/~nao/pape r/kohtake04uphoto.pdf [retrieved on 2013-01-22]
- Genta Suzuki ET AL: "uPhoto Tools: Photobased Application Framework for Controlling Networked Appliances and Sensors", Electronic Adjunct Proceedings of The 6th International Conference on Ubiquitous computing (UbiComp2004), 2004., 1 January 2004 (2004-01-01), XP055050752, Retrieved from the Internet: URL:http://www.ubicomp.org/ubicomp2004/adj unct/demos/suzuki.pdf [retrieved on 2013-01-22]
- SUZUKI G ET AL: "u-Photo: Interacting with Pervasive Services using Digital Still Images", LECTURE NOTES IN COMPUTER SCIENCE - LNCS, SPRINGER, DE , vol. 3468 1 January 2005 (2005-01-01), pages 190-207, XP002633412, ISSN: 0302-9743 Retrieved from the Internet: URL:http://www.ht.sfc.keio.ac.jp/~genta/Pe rvasive2005.pdf [retrieved on 2011-04-15]

## Description

### FIELD

Embodiments described herein relate generally to an electronic apparatus and a computer program.

### BACKGROUND

Approaches to reduce the power consumption of apparatuses consuming power, such as household electrical appliances, have attracted attention with increasing awareness of environmental issues in recent years. In order to properly reduce the power consumption of the household electrical appliances, it is necessary to accurately recognize target household electrical appliances because information used for determining whether power is wasted by the household electrical appliances differs for each of the various household electrical appliances installed in a home.

As one of the techniques that recognize the various household electrical appliances installed in a home, a technique has been known in which control commands are sent in a wired or wireless connection manner among the household electrical appliances and types of household electrical appliances are determined by responses made by the household electrical appliances to the control commands. For example, the determination is made by using Energy Conservation and Homecare Network (Echonet), which is a standard for household networks standardized by the International Electrotechnical Commission (IEC) etc., or Digital Living Network Alliance (DLNA) methods.

For promoting a user to perform operation for reducing the power consumption of the household electrical appliances, it is effective to allow the user to confirm the information relating to the power consumption of the household electrical appliances and to enhance the user's awareness of power saving. Meanwhile, the information relating to the power consumption of the household electrical appliances needs to be confirmed by the user in an intuitive and comprehensible manner because the user avoids the confirmation if the user needs to perform cumbersome operation to confirm the information relating to the power consumption of the household electrical appliances or needs to perform difficult operation to confirm the information. In the related art, however, a user cannot confirm the information relating to the power consumption of the household electrical appliances in an intuitive and comprehensible manner.

Document "u-Photo: A Snapshot-based Interaction Technique for Ubiquitous Embedded Information" corresponds to the preamble of claim 1.

The embodiments described herein aim to provide an electronic apparatus that allows confirmation of information relating to the power consumption of household electrical appliances in an intuitive and comprehensible manner.

### BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention.
FIG. 1 is an exemplary schematic illustrating an outline of a home system according to a first embodiment;
FIG. 2 is an exemplary schematic illustrating an outer appearance of an electronic apparatus in the first embodiment;
FIG. 3 is an exemplary block diagram illustrating a hardware structure of the electronic apparatus in the first embodiment;
FIG. 4 is an exemplary block diagram illustrating a functional structure of the electronic apparatus in the first embodiment;
FIGS. 5A to 5D are exemplary schematics illustrating screen transition of a display module of the electronic apparatus in the first embodiment;
FIGS. 6A to 6D are exemplary schematics illustrating screen transition of the display module of the electronic apparatus in the first embodiment;
FIG. 7 is an exemplary flowchart illustrating a specific operation of the electronic apparatus of the first embodiment;
FIG. 8 is an exemplary schematic illustrating an outline of a home system according to a second embodiment;
FIG. 9 is an exemplary block diagram illustrating a functional structure of an electronic apparatus in the second embodiment;
FIGS. 10A to 10D are exemplary schematics illustrating screen transition of a display module of the electronic apparatus in the second embodiment;
FIGS. 11A to 11D are exemplary schematics illustrating screen transition of the display module of the electronic apparatus in the second embodiment; and
FIG. 12 is an exemplary block diagram illustrating a functional structure of an electronic apparatus according to a third embodiment.

### SUMMARY

To overcome the problems and achieve the object mentioned above, an electronic apparatus and a computer program product according to claims 1 and 10 are provided, with various embodiments as defined in claims 2 to 9.

### DETAILED DESCRIPTION

Embodiments of an electronic apparatus and a computer program are described below with reference to the accompanying drawings. In the following embodiments, the electronic apparatus and the computer program are applied to a home system in which information relating to power consumption of various household electrical appliances (electrical devices) installed in a home is displayed on an electronic apparatus such as a tablet terminal that can be easily carried by a user (an operator) so as to enhance the user's awareness of power saving and cause the user to act for power saving. The home system enables a user to confirm the information relating to the power consumption of the household electrical appliances in an intuitive and comprehensible manner by utilizing inherent good operability of the electronic apparatus such as the tablet terminal.

### First embodiment

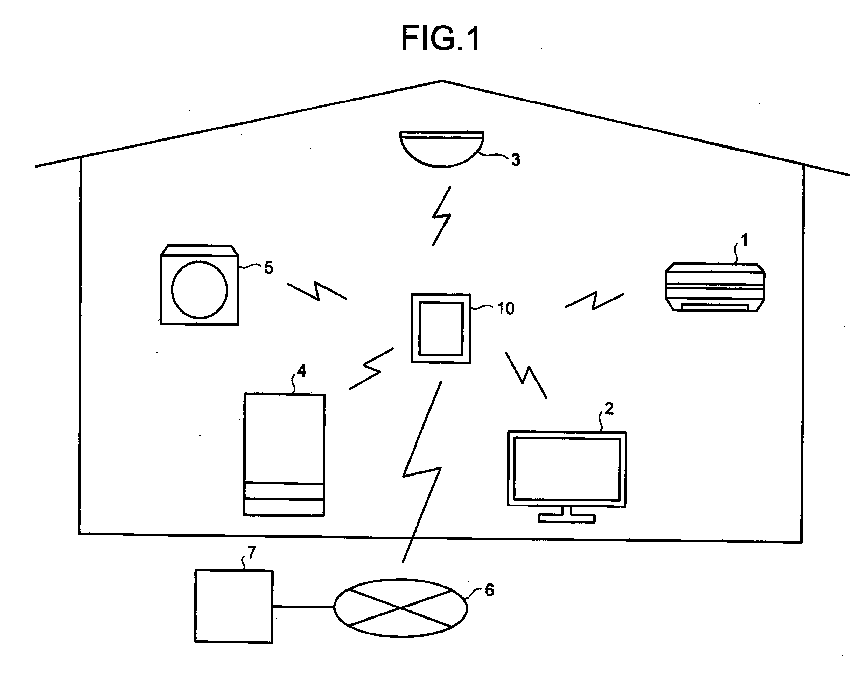

FIG. 1 is a schematic illustrating an outline of a home system according to a first embodiment. In the home, an air conditioner 1, a television 2, a lighting system 3, a refrigerator 4 and a washing and drying machine 5 are installed as examples of the household electrical appliances. The home system of the embodiment uses an electronic apparatus 10 serving as a tablet terminal, on which the information relating to the power consumption of each household electrical appliance is displayed. The electronic apparatus 10 according to the embodiment has a function to take (input) an image and uses the taken (input) image for identifying the household electrical appliance the information relating to the power consumption of which is to be displayed.

The electronic apparatus 10 according to the embodiment has a function to acquire information from each of the air conditioner 1, the television 2, the lighting system 3, the refrigerator 4, and the washing and drying machine 5 by wireless communications. For example, an adaptor (not illustrated) is connected to each household electrical appliance for performing wireless communications with the electronic apparatus 10. The electronic apparatus 10 performs wireless communications with each household electrical appliance through the adaptor and acquires the information from each household electrical appliance. Various known standards, such as Bluetooth (registered trademark) and ZigBee (registered trademark) can be used for the wireless communications made therebetween.

The electronic apparatus 10 according to the embodiment has a function to acquire various types of information from an information supply server 7 on a network 6 by being connected to the network 6 by utilizing mobile communications technologies such as the third-generation (3G) communications or a Wi-Fi router, for example. The electronic apparatus 10 acquires the information from each household electrical appliance in the home and the information supply server 7 on the network 6 by using a wireless communications module, which is described later, built in the electronic apparatus 10.

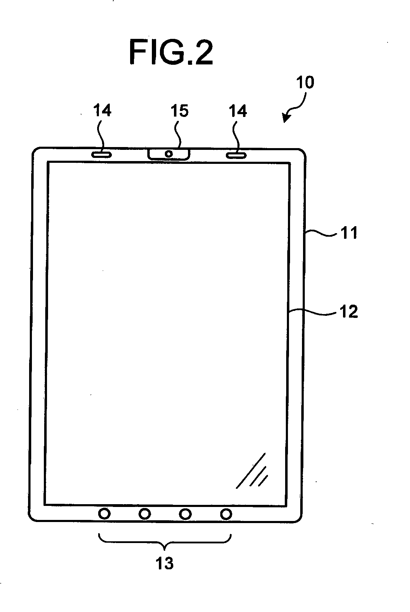

FIG. 2 is a schematic illustrating an example of the outer appearance of the electronic apparatus 10 according to the embodiment. The electronic apparatus 10 has a housing 11, which has a thin box shape and is gripped by a user. The housing 11 has a display module 12, which displays the information, on a front surface (one of the main surfaces) thereof. The display module 12 is provided with a touch panel that detects a position, which has been touched by a user, on a display screen. The housing 11 has operation switches 13, by which a user performs various types of operation, located under the display module 12 on the front surface. The housing 11 has speakers 14, from which voices are output, located upper the display module 12 on the front surface. The housing 11 has a camera module 15, which is used for taking images, located the upper area on the front surface. The camera module 15 comprises a front camera that takes images on a side adjacent to the front surface of the housing 11 and a rear camera that takes images on a side adjacent to a rear surface (the other main surface) of the housing 11.

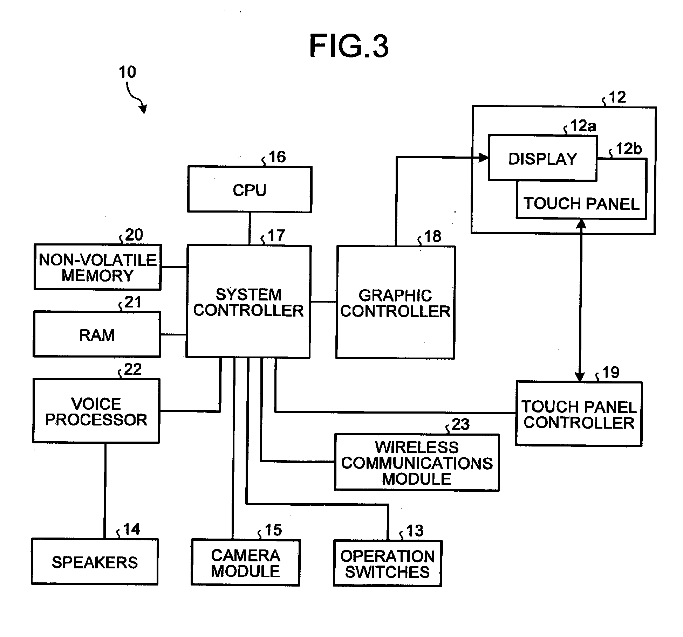

FIG. 3 is a block diagram illustrating an example of a hardware structure of the electronic apparatus 10 according to the embodiment. As illustrated in FIG. 3, the electronic apparatus 10 comprises a central processing unit (CPU) 16, a system controller 17, a graphic controller 18, a touch panel controller 19, a non-volatile memory 20, a random access memory (RAM) 21, a voice processor 22, and a wireless communications module 23, in addition to the above-described structure.

The display module 12 is a so-called touch screen structured by combining a display 12a and a touch panel 12b. Examples of the display 12a include a liquid crystal display (LCD) and an organic electro luminescence (EL) display. The touch panel 12b detects a position (touched position), which has been touched by a finger of a user or a stylus pen, on the display screen of the display 12a.

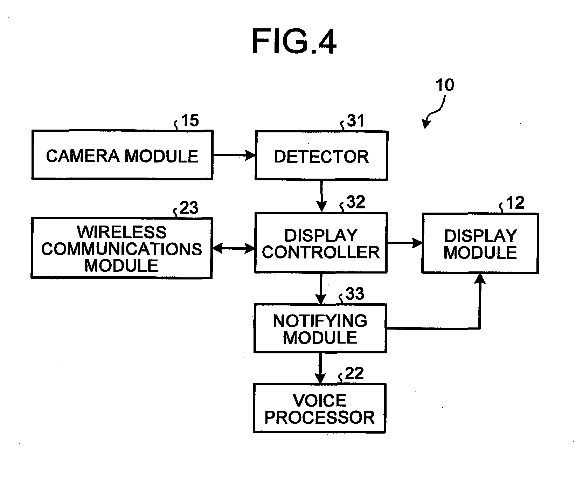

The CPU 16 is a processor that overall controls the operation of the electronic apparatus 10. The CPU 16 controls each component of the electronic apparatus 10 through the system controller 17. The CPU 16 realizes functions for controlling components of the electronic apparatus 10 by executing an operation system and various application programs that are loaded from the non-volatile memory 20 to the RAM 21, for example. In the embodiment, the CPU 16 executes an application program for power saving (hereinafter referred to as a "power saving application"), which displays the information relating to power consumption of the household electrical appliances so as to enhance the user's awareness of power saving, and realizes functional modules, which are described later with reference to FIG. 4.

The non-volatile memory 20 stores therein the operation system, the various application programs, and various types of data necessary for executing the programs. The RAM 21 serves as the main memory of the electronic apparatus 10 and provides a working area for the CPU 16 when the CPU 16 executes the programs.

The system controller 17 comprises a memory controller that controls access to the non-volatile memory 20 and the RAM 21. The system controller 17 has a function to perform communications with the graphic controller 18, the touch panel controller 19, and the voice processor 22. The system controller 17 has a function to receive the information relating to the user' s operation received by the operation switches 13 and image information from the camera module 15. The system controller 17 has a function to acquire various types of information from an outside of the electronic apparatus 10 by using the wireless communications module 23.

The graphic controller 18 is a display controller that controls the display 12a of the display module 12. The touch panel controller 19 controls the touch panel 12b and acquires coordinate data that indicates a user's touching position from the touch panel 12b.

The voice processor 22 produces voice guidance by voice processing such as voice synthesis and causes the speakers 14 to output the produced voice guidance under the control of the CPU 16, for example.

The wireless communications module 23 performs wireless communications with the household electrical appliances including the air conditioner 1, the television 2, the lighting system 3, the refrigerator 4, and the washing and drying machine 5, and wireless communications for establishing the connection with the network 6 under the control of the CPU 16.

FIG. 4 is a block diagram illustrating a functional structure of the electronic apparatus 10 achieved by the CPU 16 executing the power saving application. As a result of the execution of the power saving application, a detector 31, a display controller 32, and a notifying module 33 are achieved as the functional modules in the electronic apparatus 10 as illustrated in FIG. 4. The power saving application is activated, for example, when a user touches an icon, which is displayed on the display module 12 and indicates the power saving application.

The detector 31 detects the household electrical appliances (appliances that consume power) from the images taken by the camera module 15. Specifically, when a user wants to confirm the information relating to the power consumption of the air conditioner 1, for example, the user holds the electronic apparatus 10 over the air conditioner 1 while the power saving application is being activated, and images the air conditioner 1 by using the rear camera (or the front camera) of the camera module 15. The term "imaging" means not only the operation of recording an image of a subject as a still image but also the operation of inputting the image of the subject by the camera module 15 and displaying the image on the display module 12. Once an image including a subject is taken (input) by the camera module 15 in accordance with the user's operation, the detector 31 performs image processing on the taken (input) image and detects the household electrical appliance (in this case, the air conditioner 1), which is the subject imaged in accordance with the user's operation, from the processed image.

As for the image processing performed by the detector 31 on the image taken (input) by the camera module 15, various techniques can be used that have been known as techniques for detecting objects from images, such as pattern matching. When the household electrical appliances are detected by pattern matching on the images, a feature amount of each household electrical appliance installed in a home is preliminarily stored and an image input by the camera module 15 and the feature amount of each household electrical appliance are compared. When an object that matches the feature amount of any of the household electrical appliances is extracted from the image, the object is detected as the desired household electrical appliance.

When the detector 31 detects a certain household electrical appliance from an image, the display controller 32 causes the display module 12 to display first information indicating the power consumption of the household electrical appliance and second information for determining whether the operation influencing the power consumption of the household electrical appliance needs to be performed. The display controller 32 preferably causes the display module 12 to display the first information and the second information such that they are superimposed (overlay) on the image taken (input) by the camera module 15 in accordance with the user's operation. The display module 12 on which the first information and the second information are displayed by being superimposed on the image enables the user to grasp the household electrical appliance in association with the first information and the second information intuitively because the image taken (input) by the camera module 15 in accordance with the user's operation includes the household electrical appliance detected by the detector 31.

The first information is the current power consumption of the household electrical appliance, for example. The current power consumption of the household electrical appliance can be acquired from the household electrical appliance, for example. The display controller 32 acquires the current power consumption of the household electrical appliance from the household electrical appliance detected by the detector 31 by using the wireless communications module 23, and causes the display module 12 to display the current power consumption. When a power measurement unit is connected to a power distribution board that distributes power to each household electrical appliance in a home and measures the power consumption of each household electrical appliance in real time, the display controller 32 may access the power measurement unit by using the wireless communications module 23, acquire the current power consumption of the household electrical appliance detected by the detector 31 from the power measurement unit, and cause the display module 12 to display the current power consumption. When a home server is installed that totally controls each household electrical appliance in a home while watching the operation of each household electrical appliance, the display controller 32 may access the home server by using the wireless communications module 23, acquire the current power consumption of the household electrical appliance detected by the detector 31 from the home server, and cause the display module 12 to display the current power consumption.

When the household electrical appliance, the power measurement unit, or the home server has a function to store past (e.g., previous day) power consumption of the household electrical appliance, the display controller 32 may acquire the previous day's power consumption of the household electrical appliance from the household electrical appliance, the power measurement unit, or the home server, and cause the display module 12 to display the previous day's power consumption of the household electrical appliance together with the current power consumption as the first information. When the household electrical appliance, the power measurement unit, or the home server has a function to calculate estimated power consumption of the day based on the current power consumption of the household electrical appliance, the display controller 32 may acquire the estimated power consumption of the day from the household electrical appliance, the power measurement unit, or the home server, and cause the display module 12 to display the estimated power consumption of the day of the household electrical appliance together with the current power consumption and the previous day' s power consumption as the first information. The first information can be displayed in any display forms such as a numerical display and a graph. The display form of the first information may be changed in accordance with the user's setting.

The second information is used for determining whether the operation influencing the power consumption of the household electrical appliance detected by the detector 31 from the image needs to be performed, as described above. The operation influencing the power consumption of the household electrical appliance depends on the type of household electrical appliance. Accordingly, the second information indicates items different from each type of household electrical appliance.

When the household electrical appliance detected by the detector 31 from the image is the air conditioner 1, examples of the second information include a room temperature, an outdoor air temperature, and weather information indicating a current weather, a weather forecast, and an air temperature change. When the detector 31 detects the air conditioner 1 from the image, the display controller 32 acquires the information indicating a room temperature measured by a built-in temperature sensor of the air conditioner 1 from the air conditioner 1, and information indicating an outdoor air temperature and weather information from the information supply server 7 on the network 6 by using the wireless communications module 23, for example. Thereafter, the display controller 32 causes the display module 12 to display the item indicating the information as the second information for each piece of information acquired from the air conditioner 1 and the information supply server 7. The second information is useful for a user to determine whether the user should perform the operation influencing the power consumption of the air conditioner 1, e.g., on/off operation of the power source or operation to change a set temperature of the air conditioner 1. The display controller 32 may acquire other information relating to the air conditioner 1 (e.g., dirt conditions of a filter of the air conditioner 1) in addition to the first information and the second information, and cause the display module 12 to display the other information together with the first information and the second information.

When the household electrical appliance detected by the detector 31 from the image is the television 2, examples of the second information include continuous viewing time (continuous power-on time) and information of whether the television 2 is in a power saving mode. The power saving mode is an operation mode by which brightness of the display screen is lowered so as to reduce the power consumption of the television 2. When the detector 31 detects the television 2 from the image, the display controller 32 acquires the information indicating the continuous viewing time and the information of whether the television 2 is in the power saving mode from the television 2 by using the wireless communications module 23, for example. Thereafter, the display controller 32 causes the display module 12 to display the item indicating the information as the second information for each piece of information acquired from the television 2. The second information is useful for a user to determine whether the user should perform the operation influencing the power consumption of the television 2, e.g., on/off operation of the power source or operation to switch between the power saving mode and a normal mode of the television 2. The display controller 32 may acquire other information relating to the television 2 (e.g., a title of a program being viewed) in addition to the first information and the second information and cause the display module 12 to display the other information together with the first information and the second information.

When the household electrical appliance detected by the detector 31 from the image is the lighting system 3, examples of the second information include the brightness of a room, and weather information indicating a current weather, a weather forecast, and an air temperature change. When the detector 31 detects the lighting system 3 from the image, the display controller 32 acquires the information indicating the brightness of the room measured by a built-in illuminance sensor of the lighting system 3 from the lighting system 3 and the weather information from the information supply server 7 on the network 6 by using the wireless communications module 23, for example. Thereafter, the display controller 32 causes the display module 12 to display the item indicating the information as the second information for each piece of information acquired from the lighting system 3 and the information supply server 7. The second information is useful for a user to determine whether the user should perform the operation influencing the power consumption of the lighting system 3, e.g., on/off operation of the power source or operation to switch among levels of brightness of the lighting system 3. The display controller 32 may acquire other information relating to the lighting system 3 (e.g., wear of a light bulb) in addition to the first information and the second information and cause the display module 12 to display the other information together with the first information and the second information.

When the household electrical appliance detected by the detector 31 from the image is the refrigerator 4, examples of the second information include a refrigerator temperature and a storage rate. When the detector 31 detects the refrigerator 4 from the image, the display controller 32 acquires the information indicating the refrigerator temperature measured by a built-in temperature sensor of the refrigerator 4 and other information indicating the storage rate of the refrigerator 4 detected by another sensor from the refrigerator 4 by using the wireless communications module 23, for example. Thereafter, the display controller 32 causes the display module 12 to display the item indicating the information as the second information for each piece of information acquired from the refrigerator 4. The second information is useful for a user to determine whether the user should perform the operation influencing the power consumption of the refrigerator 4, e.g., operation to change a set temperature of the refrigerator 4. The display controller 32 may acquire other information relating to the refrigerator 4 (e.g., an amount of stored ice, or remaining quantity of water in an icemaker) in addition to the first information and the second information and cause the display module 12 to display the other information together with the first information and the second information.

When the household electrical appliance detected by the detector 31 from the image is the washing and drying machine 5, examples of the second information include remaining operation time to the completion of drying, and weather information indicating a current weather, a weather forecast, and an air temperature change. When the detector 31 detects the washing and drying machine 5 from the image, the display controller 32 acquires the information indicating the remaining operation time to the completion of drying from the washing and drying machine 5 and the weather information from the information supply server 7 on the network 6 by using the wireless communications module 23, for example. Thereafter, the display controller 32 causes the display module 12 to display the item indicating the information as the second information for each piece of information acquired from the washing and drying machine 5 and the information supply server 7. The second information is useful for a user to determine whether the user should perform the operation influencing the power consumption of the washing and drying machine 5, e.g., turning off the power source of the washing and drying machine 5 so as to stop drying, and hanging the laundries out. The display controller 32 may acquire other information relating to the washing and drying machine 5 (e.g., water consumption) from the washing and drying machine 5 and the information supply server 7 on the network 6 in addition to the first information and the second information, and cause the display module 12 to display the other information together with the first information and the second information.

The electronic apparatus 10 according to the embodiment stores therein, for each household electrical appliance in the home, the content of the information to be displayed on the display module 12 as the second information, information indicating acquisition destinations from which the first information and the second information are acquired (e.g., address information relating to the household electrical appliance and address information relating to the information supply server 7), and information necessary for the detector 31 to detect the household electrical appliance from the image (e. g. , information relating to the feature amount of the household electrical appliance) in association with the identification (ID) of each household electrical appliance, for example. The various types of information are stored in the non-volatile memory 20, for example, and loaded to the RAM 21 from the non-volatile memory 20 when the power saving application is activated. For example, when the detector 31 detects a certain household electrical appliance from an image taken (input) by the camera module 15, the detector 31 passes the ID of the detected household electrical appliance to the display controller 32. The display controller 32 identifies the contents of the information to be displayed as the second information based on the ID of the household electrical appliance and the acquisition destinations of the first information and the second information, and acquires the first information and the second information.

The notifying module 33 notifies a user of an operation method for reducing the power consumption of the household electrical appliance detected by the detector 31 from the image with the voice guidance, for example. In this regard, the notifying module 33 preferably determines whether the operation for reducing the power consumption of the household electrical appliance detected by the detector 31 from the image is recommended based on the various types of information acquired by the display controller 32, and preferably notifies the user of the operation method if it is determined that the operation is recommended.

Specifically, when the household electrical appliance detected by the detector 31 from the image is the air conditioner 1, for example, the notifying module 33 determines whether the operation to increase the set temperature or the operation to turn off the power source of the air conditioner 1 is recommended based on the various types of information, such as a room temperature, an outdoor air temperature, and the weather information, acquired by the display controller 32 as the second information. If it is determined that the operation is recommended, the notifying module 33 causes the speakers 14 to output the voice guidance such as "the set temperature is too low, would you like to increase the temperature?" or "the outdoor air temperature is low, would you like to stop the air conditioner and close windows?".

For example, when the household electrical appliance detected by the detector 31 from the image is the television 2, the notifying module 33 determines whether the operation to turn off the power source of the television 2 or the operation to switch the operation mode from the normal mode to the power saving mode is recommended based on the various types of information such as the continuous viewing time and whether the operation mode is the power saving mode, acquired by the display controller 32 as the second information. If it is determined that the operation is recommended, the notifying module 33 causes the speakers 14 to output the voice guidance such as "the continuous viewing time is over three hours, would you like to turn off the power source of the television?" or "the power saving mode is now off, if you turn on the power saving mode, the power consumption will be reduced".

The notifying module 33 may cause the display module 12 to display a message sentence with the same content that of the voice guidance in cooperation with the display controller 32 so as to notify a user of the operation method for reducing the power consumption of the household electrical appliance as an alternative of or in addition to the voice guidance. In this case, the message sentence is superimposed on the display screen on which the first information and the second information are displayed, for example.

Once the notifying module 33 notifies a user of the operation method for reducing the power consumption of the household electrical appliance as described above, the display controller 32 causes the display module 12 to further display an operation screen that receives the user's operation on the household electrical appliance. That is, the display controller 32 causes the display module 12 to further display an operation screen that allows the user to perform the operation on the household electrical appliance in accordance with the operation method notified from the notifying module 33 at the same time of or after the notification of the notifying module 33 after causing the display module 12 to display the first information and the second information.

Specifically, when the notifying module 33 notifies a user of the operation to increase the set temperature of the air conditioner 1, for example, the display controller 32 causes the display module 12 to further display the operation screen for changing the set temperature of the air conditioner 1. For example, when the notifying module 33 notifies a user of the operation to turn off the power source of the air conditioner 1, the display controller 32 causes the display module 12 to further display the operation screen for switching between on and off of the power source of the air conditioner 1. For example, when the notifying module 33 notifies a user of the operation to turn off the power source or switch the operation mode from the normal mode to the power saving mode of the television 2, the display controller 32 causes the display module 12 to further display the operation screen for switching between on and off of the power source of the television 2 or for switching the operation mode of the television 2 from the normal mode to the power saving mode. The operation screens are superimposed on the display screen on which the first information and the second information are displayed, for example. The display controller 32 may cause the display module 12 to further display the operation screen that receives the operation on the household electrical appliance after causing the display module 12 to display the first information and the second information regardless of the presence or absence of the notification of the operation method by the notifying module 33.

When a user performs operation on the household electrical appliance by using the operation screen displayed on the display module 12 by being caused by the display controller 32, an operation command corresponding to the operation is transmitted to the household electrical appliance to be operated through the wireless communications module 23. Upon receiving the operation command, the operation of the household electrical appliance is controlled in accordance with the operation command. That is, the electronic apparatus 10 according to the embodiment can be utilized as a remote control terminal for remotely control the household electrical appliance by the display controller 32 causing the display module 12 to display the operation screen. The technique for utilizing the electronic apparatus 10, such as the tablet terminal, as a remote control terminal has been known. The detailed description thereof is omitted.

The operation of the household electrical appliance is controlled in accordance with the operation command transmitted from the electronic apparatus 10 according to the embodiment, so that the power consumption of the household electrical appliance is reduced. When the power consumption of the household electrical appliance has been reduced, the display controller 32 acquires the power consumption after having being reduced from the household electrical appliance by using the wireless communications module 23, and causes the display module 12 to change the display form of the first information to the display form from which the reduction of the power consumption can be recognized. As a result, a user can intuitively recognize that the power consumption of the household electrical appliance has been reduced by the operation through the operation screen.

The notifying module 33 may notify a user of a maintenance method for reducing the power consumption of the household electrical appliance detected by the detector 31 from the image with the voice guidance, for example. In this regard, the notifying module 33 preferably determines whether the maintenance for reducing the power consumption of the household electrical appliance detected by the detector 31 from the image is recommended based on the various types of information acquired by the display controller 32, and preferably notifies the user of the maintenance method with the voice guidance, for example, if it is determined that the maintenance is recommended.

Specifically, when the household electrical appliance detected by the detector 31 from the image is the air conditioner 1, for example, the notifying module 33 determines whether a filter cleaning of the air conditioner 1 is recommended based on the information that is acquired by the display controller 32 and indicates the dirt conditions of the filter of the air conditioner 1. If it is determined that the filter cleaning is recommended, the notifying module 33 causes the speakers 14 to output the voice guidance that explains a filter cleaning method, for example. In this regard, the notifying module 33 preferably causes the speakers 14 to output the voice guidance that explains a filter cleaning method after notifying a user of an alarm promoting the filter cleaning of the air conditioner 1.

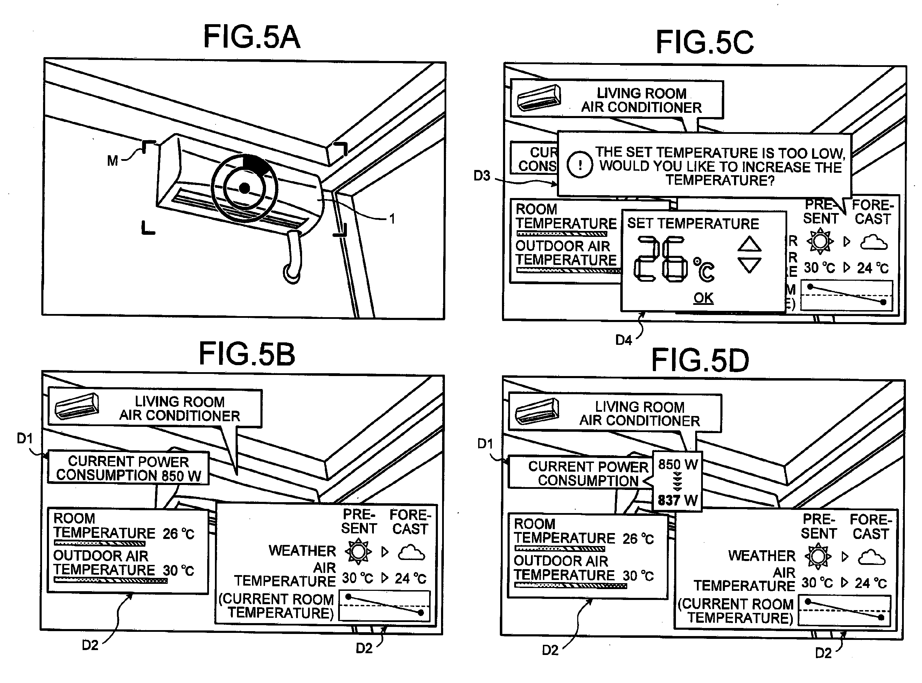

Specific examples of the screen displayed on the display module 12 of the electronic apparatus 10 are described below. FIGS. 5A to 5D are schematics illustrating an example of the screen transition of the display module 12 when the information relating to the power consumption of the air conditioner 1 is displayed.

When a user holds the electronic apparatus 10 over the air conditioner 1 and the camera module 15 images the air conditioner 1 in an imaging area thereof, an image that is input by the camera module 15 and includes the air conditioner 1 is displayed on the display module 12 as illustrated in FIG. 5A. The detector 31 detects the air conditioner 1 from the image input by the camera module 15. In this regard, a mark M that indicates a detection area of the detected household electrical appliance is preferably displayed on the display screen of the display module 12 so as to cause the user to recognize that the detector 31 has detected the household electrical appliance.

When the detector 31 detects the air conditioner 1 from the image, the display controller 32 acquires the first information and the second information relating to the air conditioner 1 and causes the display module 12 to display the first information and the second information. As a result, the display screen of the display module 12 transits from the screen illustrated in FIG. 5A to the screen illustrated in FIG. 5B, on which, first, display data of "living room air conditioner" that indicates the air conditioner 1 detected by the detector 31 is displayed.

Then, on the display screen illustrated in FIG. 5B, the current power consumption of the air conditioner 1 is displayed as first information D1, and additionally, the various types of information such as the room temperature, the outdoor air temperature, the current weather, the current air temperature, the weather forecast, the forecasted air temperature, and the graph indicating the relationship between the air temperature change and the current room temperature are displayed as second information D2. Viewing the display screen, the user recognizes the current power consumption of the air conditioner 1 and whether the current room temperature is appropriate to the current and forecasted air temperatures, and can accurately determine whether the user should turn off the power source or change the set temperature of the air conditioner 1.

When the detector 31 detects the air conditioner 1 from the image, the image including the air conditioner 1 is preferably recorded as a still image, and when the various types of information relating to the air conditioner 1 are displayed after the detection, the various types of information are preferably displayed so as to be superimposed on the recorded still image serving as a background. As a result, the user can intuitively recognize that the displayed various types of information relate to the air conditioner 1 even if the user moves the electronic apparatus 10 after the detector 31 detects the air conditioner 1 from the image.

When a predetermined period of time elapses, for example, after the display controller 32 causes the display module 12 to display the first information and the second information relating to the air conditioner 1, the notifying module 33 causes the speakers 14 to output the voice guidance for notifying the user of an operation method for reducing the power consumption of the air conditioner 1 and causes the display module 12 to display a message sentence indicating the operation method for reducing the power consumption of the air conditioner 1 in cooperation with the display controller 32. The display controller 32 causes the display module 12 to further display the operation screen that receives the user' s operation on the air conditioner 1. As a result, the display screen of the display module 12 transits from the screen illustrated in FIG. 5B to the screen illustrated in FIG. 5C.

On the display screen illustrated in FIG. 5C, a message sentence D3 of "the set temperature is too low, would you like to increase the temperature? " and an operation screen D4 for changing the set temperature of the air conditioner 1 are superimposed on the display screen illustrated in FIG. 5B. The user can reliably recognize that it is preferable to increase the set temperature of the air conditioner 1 by the message sentence D3 on the display screen or the voice guidance, and can easily perform the operation to increase the set temperature of the air conditioner 1 by using the operation screen D4 displayed on the display module 12. That is, the user can easily perform the operation to reduce the power consumption of the air conditioner 1 in accordance with the voice guidance or the message sentence D3 notified from the electronic apparatus 10 while using the electronic apparatus 10 as the remote control terminal.

When the user performs the operation to increase the set temperature of the air conditioner 1 by using the operation screen D4 displayed on the display module 12, the operation command corresponding to the operation is transmitted to the air conditioner 1 through the wireless communications module 23 and the set temperature of the air conditioner 1 is increased in accordance with the operation command. As a result, the power consumption of the air conditioner 1 is reduced. When the user performs the operation by using the operation screen D4, the display controller 32 causes the display module 12 to stop displaying the message sentence D3 and the operation screen D4, acquires the power consumption, which has been reduced by changing the set temperature in accordance with the operation command, of the air conditioner 1 from the air conditioner 1 by using the wireless communications module 23, and causes the display module 12 to change the display form of the first information D1 displayed thereon to the display form from which the reduction of the power consumption can be recognized. As a result, the display screen of the display module 12 transits from the screen illustrated in FIG. 5C to the screen illustrated in FIG. 5D.

On the display screen illustrated in FIG. 5D, the first information D1 is displayed such that it can be seen that the power consumption of the air conditioner 1 has been reduced from 850 W to 837 W. Viewing the first information D1 on the display screen, the user can intuitively recognize that the power consumption of the air conditioner 1 has been reduced by the operation through the operation screen D4.

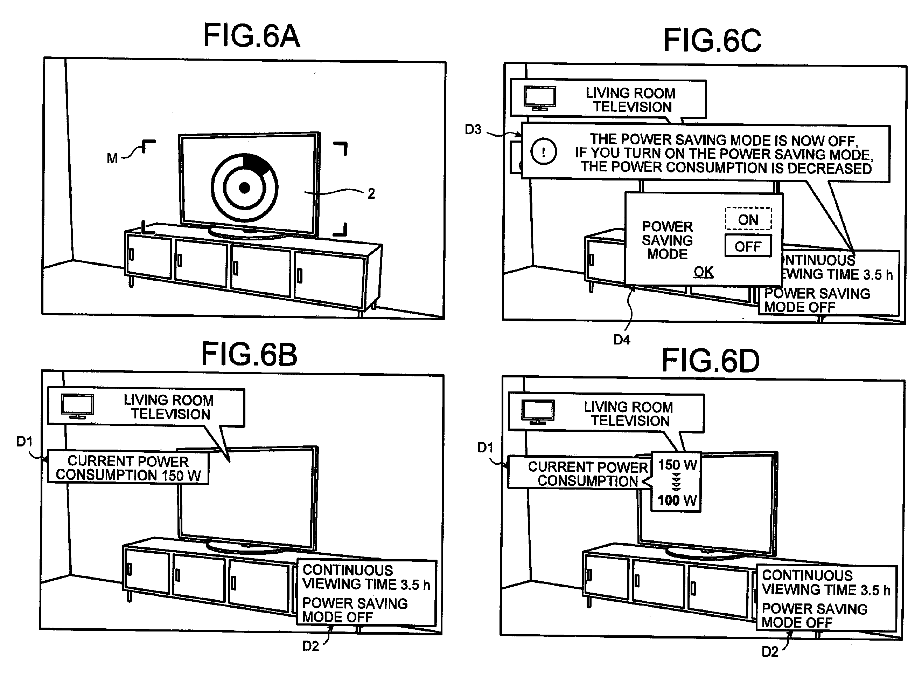

FIGS. 6A to 6D are schematics illustrating an example of the screen transition of the display module 12 when the information relating to the power consumption of the television 2 is displayed.

When a user holds the electronic apparatus 10 over the television 2, the detector 31 detects the television 2 from the image input by the camera module 15. Meanwhile, the mark M that indicates the detection area of the detected household electrical appliance is displayed on the display screen of the display module 12 as illustrated in FIG. 6A so as to cause the user to recognize that the detector 31 has detected the household electrical appliance.

When the detector 31 detects the television 2 from the image, the display controller 32 acquires the first information and the second information relating to the television 2, and causes the display module 12 to display the first information and the second information. As a result, the display screen of the display module 12 transits from the screen illustrated in FIG. 6A to the screen illustrated in FIG. 6B, on which, first, display data of "living room television" that indicates the television 2 detected by the detector 31 is displayed. Then, on the display screen illustrated in FIG. 6B, the current power consumption of the television 2 is displayed as the first information D1, and additionally, the various types of information such as the continuous viewing time and whether the television 2 is in the power saving mode are displayed as the second information D2. Viewing the display screen, the user recognizes the current power consumption and the operation state of the television 2, and can accurately determine whether the user should turn off the power source of the television 2 or switch the operation mode from the normal mode to the power saving mode.

When the detector 31 detects the television 2 from the image, the image including the television 2 is preferably recorded as a still image, and when the various types of information relating to the television 2 are displayed after the detection, the various types of information are preferably displayed so as to be superimposed on the recorded still image serving as a background. As a result, the user can intuitively recognize that the displayed various types of information relate to the television 2 even if the user moves the electronic apparatus 10 after the detector 31 detects the television 2 from the image.

When a predetermined period of time elapses, for example, after the display controller 32 causes the display module 12 to display the first information and the second information relating to the television 2, the notifying module 33 causes the speakers 14 to output the voice guidance for notifying the user of an operation method for reducing the power consumption of the television 2, and causes the display module 12 to display a message sentence indicating the operation method for reducing the power consumption of the television 2 in cooperation with the display controller 32. The display controller 32 causes the display module 12 to further display the operation screen that receives the user's operation on the television 2. As a result, the display screen of the display module 12 transits from the screen illustrated in FIG. 6B to the screen illustrated in FIG. 6C.

On the display screen illustrated in FIG. 6C, the message sentence D3 of "the power saving mode is now off, if you turn on the power saving mode, the power consumption will be reduced" and the operation screen D4 for switching the operation mode of the television 2 to the power saving mode are superimposed on the display screen illustrated on FIG. 6B. The user can reliably recognize that it is preferable to switch the operation mode of the television 2 to the power saving mode by the message sentence D3 on the display screen or the voice guidance, and can easily perform the operation to switch the operation mode of the television 2 to the power saving mode by using the operation screen D4 displayed on the display module 12. That is, the user can easily perform the operation to reduce the power consumption of the television 2 in accordance with the voice guidance or the message sentence D3 notified from the electronic apparatus 10 while using the electronic apparatus 10 as the remote control terminal.

When the user performs the operation to switch the operation mode of the television 2 to the power saving mode by using the operation display D4 displayed on the display module 12, the operation command corresponding to the operation is transmitted to the television 2 through the wireless communications module 23 and the operation mode of the television 2 is switched from the normal mode to the power saving mode in accordance with the operation command. As a result, the power consumption of the television 2 is reduced. When the user performs the operation by using the operation screen D4, the display controller 32 causes the display module 12 to stop displaying the message sentence D3 and the operation screen D4, acquires the power consumption, which has been reduced by being switched from the normal mode to the power saving mode in accordance with the operation command, of the television 2 from the television 2 by using the wireless communications module 23, and causes the display module 12 to change the display form of the first information D1 displayed thereon to the display form from which the reduction of the power consumption can be recognized. As a result, the display screen of the display module 12 transits from the screen illustrated in FIG. 6C to the screen illustrated in FIG. 6D.

On the display screen illustrated in FIG. 6D, the first information D1 is displayed such that it can be seen that the power consumption of the television 2 has been reduced from 150 W to 100 W. Viewing the first information D1 on the display screen, the user can intuitively recognize that the power consumption of the television 2 has been reduced by the operation through the operation screen D4.

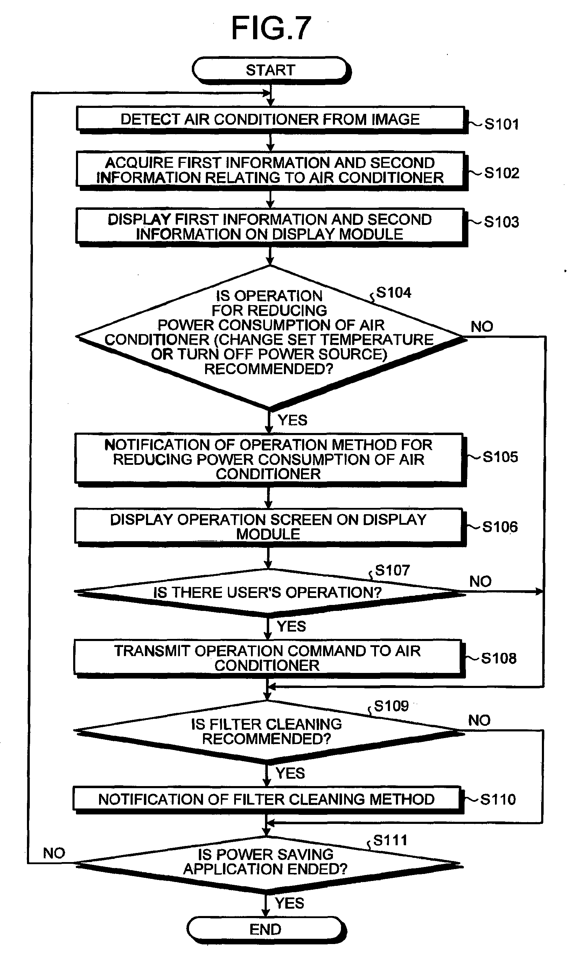

A specific example of the operation of the electronic apparatus 10 is described below with reference to FIG. 7 on a case where a user holds the electronic apparatus 10 according to the embodiment over the air conditioner 1. FIG. 7 is a flowchart illustrating the specific example of the operation of the electronic apparatus 10. The operation is started once the power saving application is activated by the user's operation.

Once the power saving application is activated, the camera module 15 starts taking (inputting) an image, and the detector 31 starts detecting the household electrical appliance from the image input by the camera module 15 (S101). Meanwhile, the notifying module 33 may cause the speakers 14 to output the voice guidance of "please hold the tablet over the desired household electrical appliance", for example, so as to promote the user to hold the electronic apparatus 10 over the desired household electrical appliance. The user can acquire the image by holding the electronic apparatus 10 over the desired household electrical appliance while confirming the image displayed on the display module 12 because the image input by the camera module 15 is displayed on the display module 12. In the example, the image of the air conditioner 1 serving as the subject is input by the camera module 15 when the user holds the electronic apparatus 10 over the air conditioner 1, and then the detector 31 detects the air conditioner 1 from the input image.

Once the air conditioner 1 is detected from the image input by the camera module 15, the display controller 32 acquires the first information indicating the power consumption of the detected air conditioner 1 and the second information for determining whether the operation influencing the power consumption of the air conditioner 1 needs to be performed from the air conditioner 1 and the information supply server 7 on the network 6 (S102). In the example, the room temperature, the outdoor air temperature, and the weather information are acquired as the second information, for example. The display controller 32 also acquires the information such as the dirt conditions of the filter of the air conditioner 1 as the information relating to the air conditioner 1.

Then, the display controller 32 causes the display module 12 to display the first information and the second information acquired at S102 (S103). The notifying module 33 determines whether the operation for reducing the power consumption of the air conditioner 1, such as the operation to increase the set temperature or turn off the power source of the air conditioner 1, is recommended based on the various types of information, such as the room temperature, the outdoor air temperature, and the weather information, acquired at S102 as the second information (S104). If it is determined that the operation to reduce the power consumption of the air conditioner 1 is recommended (YES at S104), the notifying module 33 causes the speakers 14 to output the voice guidance, such as "the set temperature is too low, would you like to increase the temperature?" or "the outdoor air temperature is low, would you like to stop the air conditioner and open windows?", and notifies the user of the operation method for reducing the power consumption of the air conditioner 1 (S105). On the other hand, if it is determined that the operation to reduce the power consumption of the air conditioner 1 is not recommended (NO at S104), the operation of the electronic apparatus 10 proceeds to S109.

When the notifying module 33 notifies the user of the operation method for reducing the power consumption of the air conditioner 1 at S105, the display controller 32 causes the display module 12 to display the operation screen allowing the user to perform operation on the household electrical appliance, such as the operation screen allowing the user to change the set temperature of the air conditioner 1 or the operation screen allowing the user to switch between on and off of the power source of the air conditioner 1 (S106), and watches the user's operation through the operation screen (S107). If the user performs the operation to increase the set temperature of the air conditioner 1 or the operation to turn off the power source of the air conditioner 1 by using the operation screen displayed on the display module 12 (YES at S107), the display controller 32 transmits the operation command corresponding to the user's operation to the air conditioner 1 through the wireless communications module 23 (S108). As a result, the set temperature of the air conditioner 1 is changed or the power source of the air conditioner 1 is turned off in accordance with the user's operation, resulting in the power consumption of the air conditioner 1 being reduced. Meanwhile, the notifying module 33 may cause the speakers 14 to output the voice guidance such as "the power consumption has been reduced" so as to cause the user to surely recognize that the power consumption of the air conditioner 1 has been actually reduced in accordance with the user's operation. If no user's operation through the operation screen is performed (NO at S107), the operation of the electronic apparatus 10 proceeds to S109 without performing the processing at S108.

Then, the notifying module 33 determines whether the filter cleaning of the air conditioner 1 is recommended based on the information indicating the dirt conditions of the filter of the air conditioner 1 acquired by the display controller 32 (S109). If it is determined that the filter cleaning of the air conditioner 1 is recommended (YES at S109), the notifying module 33 notifies the user of the alarm promoting the filter cleaning of the air conditioner 1 and causes the speakers 14 to output the voice guidance explaining the filter cleaning method, for example (S110). On the other hand, if it is determined that the filter cleaning of the air conditioner 1 is not required (NO at S109), the operation of the electronic apparatus 10 proceeds to S111 without performing the processing at S110.

During the processing described above, the operation system, for example, watches whether the user's operation to end the power saving application is performed (S111). If no user's operation to end the power saving application is performed (NO at S111), processing from S101 to S110 is repeated. If the user's operation to end the power saving application is performed (YES at S111), the processing of the flowchart illustrated in FIG. 7 ends.

As described above in detail with reference to the specific examples, the electronic apparatus 10 according to the embodiment comprises the detector 31 that detects the household electrical appliance from the image taken (input) by the camera module 15, and the display controller 32 that causes the display module 12 to display the first information indicating the power consumption of the household electrical appliance detected by the detector 31 form the image and the second information for determining whether the operation influencing the power consumption of the household electrical appliance needs to be performed. The electronic apparatus 10 according to the embodiment, which comprises the detector 31 and the display controller 32, enables a user to confirm the information relating to the power consumption of the desired household electrical appliance in an intuitive and comprehensible manner by simple operation such as holding the electronic apparatus 10 over the desired household electrical appliance (inputting the image of the household electrical appliance by the camera module 15).

The display controller 32 of the electronic apparatus 10 according to the embodiment causes the display module 12 to display the first information and the second information so as to be superimposed on the image taken (input) by the camera module 15 in accordance with the user's operation. As a result, the user can intuitively grasp the first information and the second information that are displayed on the display module 12 in association with the household electrical appliance to be operated.

The electronic apparatus 10 according to the embodiment further comprises the notifying module 33 that notifies a user of the operation method for reducing the power consumption of the household electrical appliance detected by the detector 31 from the image. The electronic apparatus 10 according to the embodiment, which comprises the notifying module 33, can notify the user of the operation method for reducing the power consumption of the household electrical appliance taken (input) by the camera module 15 and, promote the user to perform the operation contributing to power saving of the household electrical appliance.

The notifying module 33 of the electronic apparatus 10 according to the embodiment notifies a user of the maintenance method for reducing the power consumption of the household electrical appliance detected by the detector 31 from the image. As a result, the notifying module 33 can cause the user to recognize the maintenance method for reducing the power consumption of the household electrical appliance, and promote the user to perform the maintenance contributing to power saving of the household electrical appliance.

The display controller 32 of the electronic apparatus 10 according to the embodiment causes the display module 12 to further display the operation display that receives the operation on the household electrical appliance detected by the detector 31 from the image after causing the display module 12 to display the first information and the second information. As a result, the user can simply operate the operation contributing to power saving of the household electrical appliance while viewing the display screen of the display module 12.

The display controller 32 of the electronic apparatus 10 according to the embodiment causes the display module 12 to display the first information in a display form from which the reduction of the power consumption can be recognized when the power consumption of the household electrical appliance has been reduced in accordance with the operation received by the operation screen of the display module 12. As a result, a user can intuitively recognize that the power consumption of the household electrical appliance has been reduced by the operation through the operation screen.

### Modified examples

In a home, there are objects the states of which are changed by manual operation without consuming power and the changed states of which influence the power consumption of the household electrical appliances. For example, windows are opened or closed manually without power consumed by the windows. The states of the windows, however, influence the power consumption of the air conditioner 1. For example, when the windows are opened, outdoor air is taken into a room and the room temperature approaches an outdoor air temperature. As another example, curtains are opened or closed manually without power consumed by the curtains. The states of the curtains, however, influence the power consumption of the lighting system 3. For example, when the curtains are opened, outside light enters a room and the brightness of the room is changed.

The electronic apparatus 10 according to the embodiment may be configured to allow the detector 31 to detect the objects such as the windows and the curtains in addition to the household electrical appliances from the images input by the camera module 15, and to allow the display controller 32 to cause the display module 12 to display third information for determining whether a change in the state of the objects is required when the detector 31 detects the objects from the images.

Specifically, when the detector 31 detects windows from the image, the display controller 32 acquires the third information relating to the windows, such as the outdoor air temperature, the weather information, and the room temperature, and causes the display module 12 to display the third information. The third information is useful for a user to determine the necessity of opening the windows to take in outdoor air or closing the windows to block outdoor air. In addition, a user may hold the electronic apparatus 10 over windows such that the electronic apparatus 10 detects the outdoor conditions of the home. In this case, it is also useful to notify the user of various types of information such as an outdoor temperature and weather information by displaying them on the electronic apparatus 10.

When the detector 31 detects curtains from the image, the display controller 32 acquires the third information relating to the curtains, such as the brightness of the room and planned blackouts in the area, and causes the display module 12 to display the third information. The third information is useful for a user to determine the necessity of opening the curtains to take in outdoor light or closing the curtains to block outdoor light.

### Second embodiment

A second embodiment is described below. In the second embodiment, a plurality of the same types of household electrical appliances are installed in a home. The electronic apparatus 10 according to the first embodiment targets only the household electrical appliance detected by the detector 31 from the image taken (input) by the camera module 15, and displays the information relating to the power consumption of the household electrical appliance on the display module 12. In contrast, an electronic apparatus according to the second embodiment (hereinafter referred to as an electronic apparatus 10A) causes the display module 12 to display the information relating to the power consumption of not only the household electrical appliance detected by the detector 31 but also other household electrical appliances of the same type as the detected household electrical appliance. In the following description, the same structures as those of the first embodiments are labeled with the same reference numerals and the duplicated descriptions thereof are omitted.

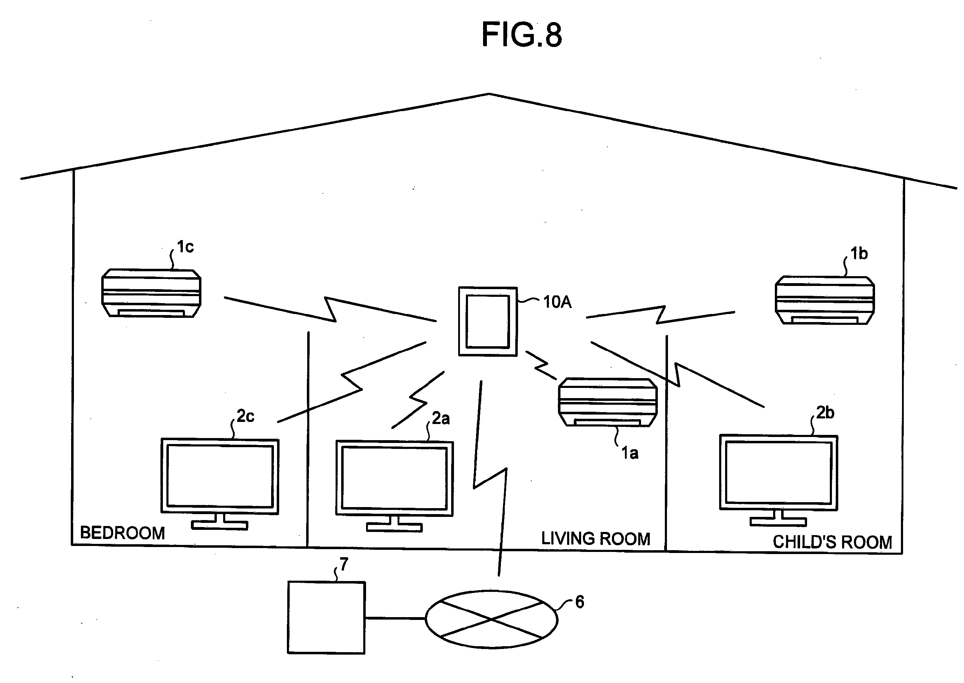

FIG. 8 is a schematic illustrating an outline of a home system according to the second embodiment. In the embodiment, in a living room, an air conditioner (hereinafter denoted as a living room air conditioner 1a) and a television (hereinafter denoted as a living room television 2a) are installed. In a child's room, another air conditioner (hereinafter denoted as a child's room air conditioner 1b) and another television (hereinafter denoted as a child's room television 2b) are installed. In a bedroom, still another air conditioner (hereinafter denoted as a bedroom air conditioner 1c) and still another television (hereinafter denoted as a bedroom television 2c) are installed. The living room air conditioner 1a, the child's room air conditioner 1b, and the bedroom air conditioner 1c are of the same type as each other. The living room television 2a, the child's room television 2b, and the bedroom television 2c are of the same type as each other.

The electronic apparatus 10A according to the embodiment has the same hardware structure as the electronic apparatus 10 according to the first embodiment (refer to FIG. 3) and can acquire various types of information from each of the living room air conditioner 1a, the child's room air conditioner 1b, the bedroom air conditioner 1c, the living room television 2a, the child's room television 2b, and the bedroom television 2c, and the information supply server 7 on the network 6.

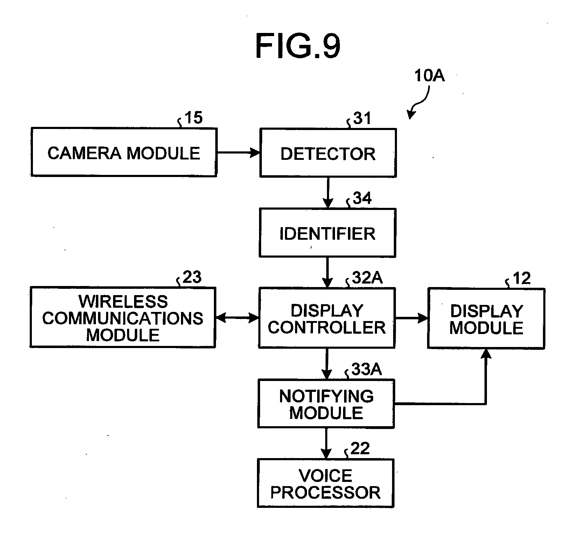

FIG. 9 is a block diagram illustrating a functional structure of the electronic apparatus 10A achieved by the CPU 16 of the electronic apparatus 10A according to the embodiment executing the power saving application. As illustrated in FIG. 9, the electronic apparatus 10A according to the embodiment differs from the electronic apparatus 10 according to the first embodiment in that the functional structure of the electronic apparatus 10A additionally comprises an identifier 34, and comprises a display controller 32A instead of the display controller 32 of the first embodiment, and a notifying module 33A instead of the notifying module 33 of the first embodiment.

The identifier 34 identifies other household electrical appliances of the same type as the household electrical appliance detected by the detector 31 from the image taken (input) by the camera module 15. For example, when the household electrical appliance detected by the detector 31 from the image is the living room air conditioner 1a, the identifier 34 identifies the child's room air conditioner 1b and the bedroom air conditioner 1c as the other household electrical appliances of the same type as the living room air conditioner 1a. For example, when the household electrical appliance detected by the detector 31 from the image is the living room television 2a, the identifier 34 identifies the child's room television 2b and the bedroom television 2c as the other household electrical appliances of the same type as the living room television 2a.

The electronic apparatus 10A according to the embodiment stores therein, in the same manner as the electronic apparatus 10 according to the first embodiment, for each household electrical appliance in the home, the content of the information to be displayed on the display module 12 as the second information, information indicating the acquisition destinations from which the first information and the second information are acquired (e.g., address information relating to the household electrical appliance and address information relating to the information supply server 7), and information necessary for the detector 31 to detect the household electrical appliance from the image (e. g. , information relating to the feature amount of the household electrical appliance) in association with the ID of each household electrical appliance, for example. Particularly, in the embodiment, the IDs of the household electrical appliances of the same type as each other are associated with each other. The various types of information are stored in the non-volatile memory 20, for example, and loaded to the RAM 21 from the non-volatile memory 20 when the power saving application is activated. For example, when the detector 31 detects a certain household electrical appliance from an image taken (input) by the camera module 15, the detector 31 passes the ID of the detected household electrical appliance to the identifier 34. The identifier 34 searches the IDs of the other household electrical appliances associated with the ID of the household electrical appliance received from the detector 31, and passes the ID of the household electrical appliance received from the detector 31 and the IDs of the other household electrical appliances acquired by being searched to the display controller 32A.

When the detector 31 detects the household electrical appliance from the image and the identifier 34 identifies the other household electrical appliances of the same type as the household electrical appliance detected by the detector 31, the display controller 32A causes the display module 12 to display the first information and the second information relating to the household electrical appliances identified by the identifier 34 together with the first information and the second information relating to the household electrical appliance detected by the detector 31 from the image. For example, the display controller 32A identifies the contents of various types of information to be displayed as the second information based on the IDs of the household electrical appliances received from the identifier 34, i.e., the ID of the household electrical appliance detected by the detector 31 from the image and the IDs of the household electrical appliances identified by the identifier 34, and identifies the acquisition destinations of the first information and the second information for each household electrical appliance, and acquires the first information and the second information. Thereafter, the display controller 32A causes the display module 12 to display the acquired first information and second information for each household electrical appliance.

The notifying module 33A notifies a user of the operation method for reducing the power consumption of the household electrical appliance designated by the user's touch operation, for example, among the household electrical appliances the first information and the second information of which are displayed on the display module 12, by the voice guidance, for example. In the same manner as the notifying module 33 of the first embodiment, the notifying module 33A preferably determines whether the operation for reducing the power consumption of the designated household electrical appliance is recommended based on the various types of information acquired by the display controller 32A. If it is determined that the operation is recommended, the notifying module 33A preferably notifies the user of the operation method.

In the same manner as the notifying module 33 of the first embodiment, the notifying module 33A may cause the display module 12 to display a message sentence with the same content that of the voice guidance in cooperation with the display controller 32A so as to notify a user of the operation method for reducing the power consumption of the designated household electrical appliance as an alternative of or in addition to the voice guidance. In this case, the message sentence is superimposed on the display screen on which the first information and the second information are displayed, for example.

Once the notifying module 33A notifies the user of the operation method for reducing the power consumption of the designated household electrical appliance as described above, the display controller 32A causes the display module 12 to further display an operation screen that receives the user's operation on the household electrical appliance, in the same manner as the display controller 32 of the first embodiment. When the user performs operation on the household electrical appliance by using the operation screen, an operation command corresponding to the operation is transmitted to the household electrical appliance to be operated through the wireless communications module 23. Upon receiving the operation command, the operation of the household electrical appliance is controlled in accordance with the operation command. As a result, the power consumption of the household electrical appliance is reduced. When the power consumption of the household electrical appliance has been reduced, the display controller 32A acquires the power consumption after having being reduced from the household electrical appliance by using the wireless communications module 23, and causes the display module 12 to change the display form of the first information displayed thereon of the target household electrical appliance to the display form from which the reduction of the power consumption can be recognized. As a result, the user can intuitively recognize that the power consumption of the household electrical appliance has been reduced by the operation through the operation screen.

The notifying module 33A may notify a user of a maintenance method for reducing the power consumption of the household electrical appliance designated by the user's touch operation by the voice guidance, for example, in the same manner as the notifying module 33 of the first embodiment. In the same manner as the notifying module 33 of the first embodiment, the notifying module 33A preferably determines whether the maintenance for reducing the power consumption of the designated household electrical appliance is recommended based on the various types of information acquired by the display controller 32A. If it is determined that the maintenance is recommended, the notifying module 33A preferably notifies the user of the maintenance method by the voice guidance, for example.

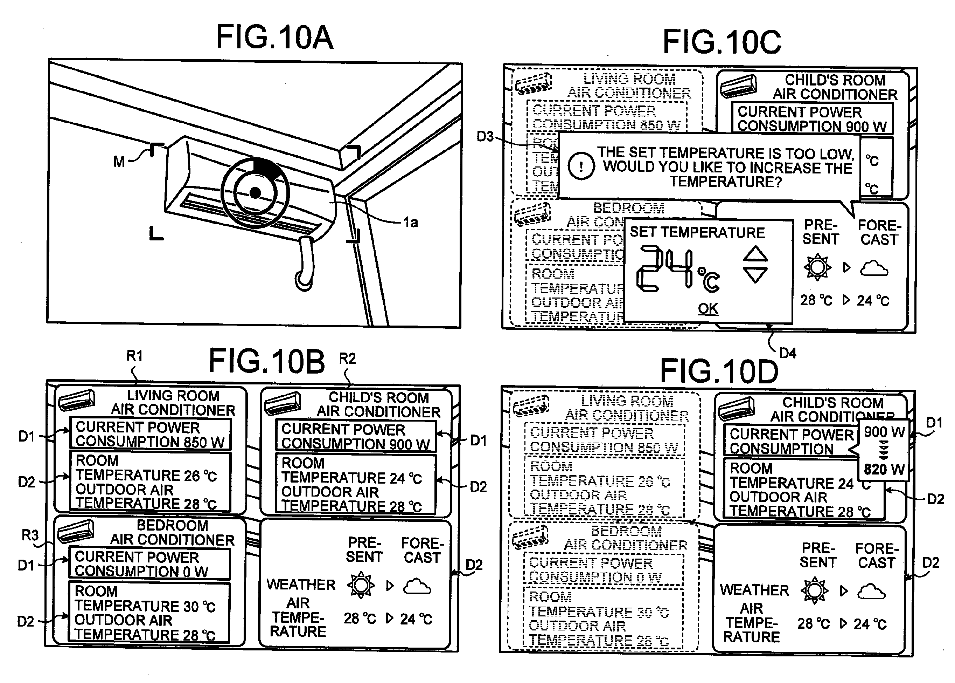

Specific examples of the screen displayed on the display module 12 of the electronic apparatus 10A according to the embodiment are described below. FIGS. 10A to 10D are schematics illustrating an example of the screen transition of the display module 12 when a user holds the electronic apparatus 10A over the living room air conditioner 1a.

When the user holds the electronic apparatus 10A over the living room air conditioner 1a and the camera module 15 images the living room air conditioner 1a in an imaging area thereof, an image that is input by the camera module 15 and includes the living room air conditioner 1a is displayed on the display module 12 as illustrated in FIG. 10A. The detector 31 detects the living room air conditioner 1a from the image input by the camera module 15.

When the detector 31 detects the living room air conditioner 1a from the input image, the identifier 34 identifies the child's room air conditioner 1b and the bedroom air conditioner 1c, which are the other household electrical appliances of the same type as the detected living room air conditioner 1a. The display controller 32A acquires the first information and the second information relating to the living room air conditioner 1a, the child's room air conditioner 1b, and the bedroom air conditioner 1c and causes the display module 12 to display the first information and the second information. As a result, the display screen of the display module 12 transits from the screen illustrated in FIG. 10A to the screen illustrated in FIG. 10B.

On the display screen illustrated in FIG. 10B, in a display area R1, the current power consumption of the living room air conditioner 1a is displayed as the first information D1 relating to the living room air conditioner 1a while the room temperature of the living room and the outdoor air temperature are displayed as the second information D2 relating to the living room air conditioner 1a. In a display area R2, the current power consumption of the child's room air conditioner 1b is displayed as the first information D1 relating to the child's room air conditioner 1b while the room temperature of the child's room and the outdoor air temperature are displayed as the second information D2 relating to the child's room air conditioner 1b. In a display area R3, the current power consumption of the bedroom air conditioner 1c is displayed as the first information D1 relating to the bedroom air conditioner 1c while the room temperature of the bedroom and the outdoor air temperature are displayed as the second information D2 relating to the bedroom air conditioner 1c. In addition, in an area that does not overlap with the display areas R1, R2, and R3, the various types of weather information such as the current weather, the weather forecast, and the temperature change, are displayed as the second information D2 common in the living room air conditioner 1a, the child's room air conditioner 1b, and the bedroom air conditioner 1c. Viewing the display screen, the user can recognize the current power consumptions of the living room air conditioner 1a, the child's room air conditioner 1b, and the bedroom air conditioner 1c, and whether the current room temperatures of the respective rooms are appropriate to the current and forecasted air temperatures. As a result, the user can accurately determines whether the user should turn off the power source or change the set temperature for each of the living room air conditioner 1a, the child's room air conditioner 1b, and the bedroom air conditioner 1c.

For example, when the user designates the child's room air conditioner 1b by the touch operation on the display area R2 after the display controller 32A causes the display module 12 to display the first information and the second information relating to the living room air conditioner 1a, the child's room air conditioner 1b, and the bedroom air conditioner 1c, the notifying module 33A causes the speakers 14 to output the voice guidance for notifying the user of the operation method for reducing the power consumption of the child's room air conditioner 1b, and causes the display module 12 to display the message sentence indicating the operation method for reducing the power consumption of the child's room air conditioner 1b in cooperation with the display controller 32A. The display controller 32A causes the display module 12 to further display the operation screen that receives the user's operation on the child's room air conditioner 1b. As a result, the display screen of the display module 12 transits from the screen illustrated in FIG. 10B to the screen illustrated in FIG. 10C.

On the display screen illustrated in FIG. 10C, the message sentence D3 of "the set temperature is too low, would you like to increase the temperature?" and operation screen D4 for changing the set temperature of the child's room air conditioner 1b are superimposed on the display screen illustrated in FIG. 10B. The user can reliably recognize that it is preferable to increase the set temperature of the child's room air conditioner 1b by the message sentence D3 on the display screen or the voice guidance, and can easily perform the operation to increase the set temperature of the child's room air conditioner 1b by using the operation screen D4 displayed on the display module 12. That is, the user can easily perform the operation to reduce the power consumption of the child's room air conditioner 1b in accordance with the voice guidance or the message sentence D3 notified from the electronic apparatus 10A while using the electronic apparatus 10A as the remote control terminal in the living room.

When the message sentence D3 and the operation screen D4 are displayed on the display module 12 in response to the designation of the child's room air conditioner 1b, displaying the information relating to the living room air conditioner 1a in the display area R1 and displaying the information relating to the bedroom air conditioner 1c in the display area R3 are preferably ended or the two pieces of information are preferably displayed in a less noticeable manner as illustrated in FIG. 10C. As a result, the user can intuitively recognize that the message sentence D3 and the operation screen D4 displayed on the display module 12 relate to the child's room air conditioner 1b.

When the user performs the operation to increase the set temperature of the child's room air conditioner 1b by using the operation screen D4 displayed on the display module 12, the operation command corresponding to the operation is transmitted to the child's room air conditioner 1b through the wireless communications module 23 and the set temperature of the child's room air conditioner 1b is increased in accordance with the operation command. As a result, the power consumption of the child's room air conditioner 1b is reduced. When the user performs the operation by using the operation screen D4, the display controller 32A causes the display module 12 to end displaying the message sentence D3 and the operation screen D4, acquires the power consumption, which has been reduced by changing the set temperature in accordance with the operation command, of the child's room air conditioner 1b from the child's room air conditioner 1b by using the wireless communications module 23, and causes the display module 12 to change the display form of the first information D1 displayed thereon to the display form from which the reduction of the power consumption can be recognized. As a result, the display screen of the display module 12 transits from the screen illustrated in FIG. 10C to the screen illustrated in FIG. 10D.

On the display screen illustrated in FIG. 10D, the first information D1 is displayed such that it can be seen that the power consumption of the child's room air conditioner 1b has been reduced from 900 W to 820 W. Viewing the first information D1 on the display screen, the user can intuitively recognize that the power consumption of the child's room air conditioner 1b has been reduced by the operation through the operation screen D4.

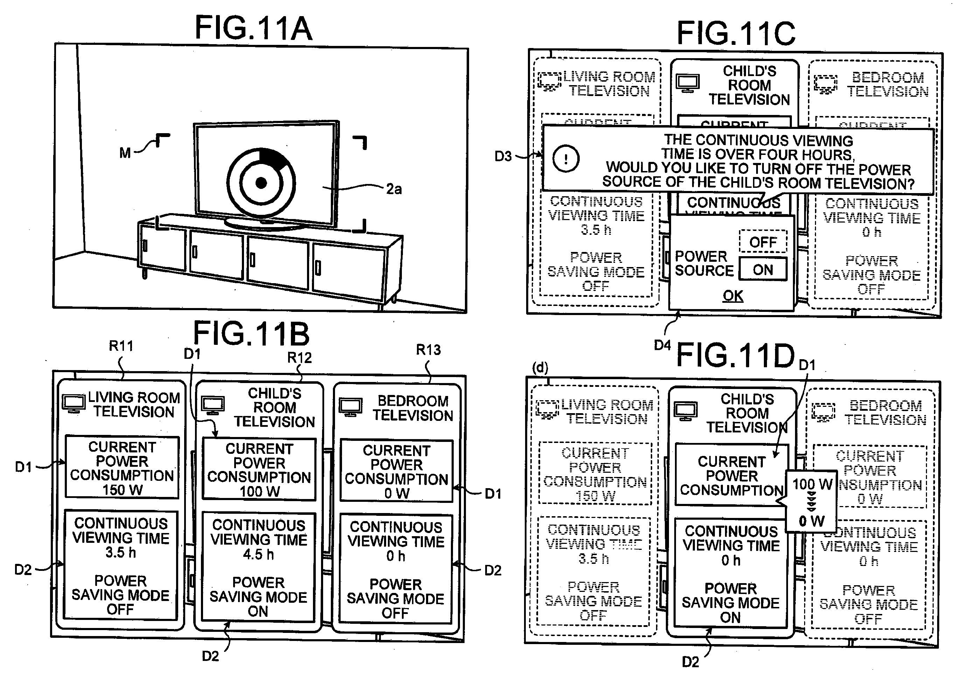

FIGS. 11A to 11D are schematics illustrating an example of the screen transition of the display module 12 when a user holds the electronic apparatus 10A over the living room television 2a.

When the user holds the electronic apparatus 10A over the living room television 2a and the camera module 15 images the living room television 2a in an imaging area thereof, an image that is input by the camera module 15 and includes the living room television 2a is displayed on the display module 12 as illustrated in FIG. 11A. The detector 31 detects the living room television 2a from the image input by the camera module 15.

When the detector 31 detects the living room television 2a from the input image, the identifier 34 identifies the child's room television 2b and the bedroom television 2c, which are the other household electrical appliances of the same type as the detected living room television 2a. The display controller 32A acquires the first information and the second information relating to the living room television 2a, the child's room television 2b, and the bedroom television 2c and causes the display module 12 to display the first information and the second information. As a result, the display screen of the display module 12 transits from the screen illustrated in FIG. 11A to the screen illustrated in FIG. 11B.

On the display screen illustrated in FIG. 11B, in a display area R11, the current power consumption of the living room television 2a is displayed as the first information D1 relating to the living room television 2a while the continuous viewing time and the information indicating whether the operation mode is the power saving mode are displayed as the second information D2 relating to the living room television 2a. In a display area R12, the current power consumption of the child's room television 2b is displayed as the first information D1 relating to the child's room television 2b while the continuous viewing time and the information indicating whether the operation mode is the power saving mode are displayed as the second information D2 relating to the child's room television 2b. In a display area R13, the current power consumption of the bedroom television 2c is displayed as the first information D1 relating to the bedroom television 2c while the continuous viewing time and the information indicating whether the operation mode is the power saving mode are displayed as the second information D2 relating to the bedroom television 2c. Viewing the display screen, the user can recognize the current power consumption of the living room television 2a, the child's room television 2b, and the bedroom television 2c, and operating states of the living room television 2a, the child's room television 2b, and the bedroom television 2c so far. As a result, the user can accurately determine whether the user should turn off the power source or switch the operation mode to the power saving mode for each of the living room television 2a, the child's room television 2b, and the bedroom television 2c.

For example, when the user designates the child's room television 2b by the touch operation on the display area R12 after the display controller 32A displays the first information and the second information relating to the living room television 2a, the child's room television 2b, and the bedroom television 2c, the notifying module 33A causes the speakers 14 to output the voice guidance for notifying the user of the operation method for reducing the power consumption of the child's room television 2b, and causes the display module 12 to display the message sentence indicating the operation method for reducing the power consumption of the child's room television 2b in cooperation with the display controller 32A. The display controller 32A causes the display module 12 to further display the operation screen that receives the user's operation on the child's room television 2b. As a result, the display screen of the display module 12 transits from the screen illustrated in FIG. 11B to the screen illustrated in FIG. 11C.

On the display screen illustrated in FIG. 11C, the message sentence D3 of "the continuous viewing time is over four hours, would you like to turn off the power source of the child's room television?" and the operation screen D4 for switching between on and off of the power source of the child's room television 2b are superimposed on the display screen illustrated in FIG. 11B. The user can reliably recognize that it is preferable to turn off the power source of the child's room television 2b by the message sentence D3 on the display screen or the voice guidance, and can easily perform the operation to turn off the power source of the child's room television 2b by using the operation screen D4 displayed on the display module 12. That is, the user can easily perform the operation to reduce the power consumption of the child's room television 2b in accordance with the voice guidance or the message sentence D3 notified from the electronic apparatus 10A while using the electronic apparatus 10A as the remote control terminal in the living room.

When the message sentence D3 and the operation screen D4 are displayed on the display module 12 in response to the designation of the child's room television 2b, displaying the information relating to the living room television 2a in the display area R11 and displaying the information relating to the bedroom television 2c in the display area R13 are preferably ended or the two pieces of information are preferably displayed in a less noticeable manner as illustrated in FIG. 11C. As a result, the user can intuitively recognize that the message sentence D3 and the operation screen D4 displayed on the display module 12 relate to the child's room television 2b.

When the user performs the operation to turn off the power source of the child's room television 2b by using the operation screen D4 displayed on the display module 12, the operation command corresponding to the operation is transmitted to the child's room television 2b through the wireless communications module 23 and the power source of the child's room television 2b is turned off in accordance with the operation command. As a result, the power consumption of the child's room television 2b is reduced. When the user performs the operation by using the operation screen D4, the display controller 32A causes the display module 12 to end displaying the message sentence D3 and the operation screen D4, acquires the power consumption, which has been reduced by turning off the power source of the child's room television 2b in accordance with the operation command, of the child's room television 2b from the child's room television 2b by using the wireless communications module 23, and causes the display module 12 to change the display form of the first information D1 displayed thereon to the display form from which the reduction of the power consumption can be recognized. As a result, the display screen of the display module 12 transits from the screen illustrated in FIG. 11C to the screen illustrated in FIG. 11D.

On the display screen illustrated in FIG. 11D, the first information D1 is displayed such that it can be seen that the power consumption of the child's room television 2b has been reduced from 100 W to 0 W. Viewing the first information D1 on the display screen, the user can intuitively recognize that the power consumption of the child's room television 2b has been reduced by the operation using the operation screen D4.

As described in detail above with reference to the specific examples, the electronic apparatus 10A according to the embodiment further comprises the identifier 34 that identifies the other household electrical appliances of the same type as the household electrical appliance detected by the detector 31 from the image taken (input) by the camera module 15. The display controller 32A causes the display module 12 to display not only the first information and the second information relating to the household electrical appliance detected by the detector 31 but also the first information and the second information relating to the other household electrical appliances identified by the identifier 34. Consequently, the electronic apparatus 10A according to the embodiment enables a user to confirm not only the information relating to the power consumption of the household electrical appliance installed in the room in which the user is present but also the information relating to the power consumptions of the other household electrical appliances of the same type installed in other rooms in an intuitive and comprehensible manner.

The notifying module 33A of the electronic apparatus 10A according to the embodiment notifies a user of the operation method for reducing the power consumption of the household electrical appliance designated by the user by the touch operation on the display screen of the display module 12, for example. As a result, the notifying module 33A can notify the user of the operation method for reducing the power consumption of the designated household electrical appliance, and promote the user to perform the operation contributing to power saving of the household electrical appliance.

The notifying module 33A of the electronic apparatus 10A according to the embodiment notifies a user of the maintenance method for reducing the power consumption of the household electrical appliance designated by the user by the touch operation on the display screen of the display module 12, for example. As a result, the notifying module 33A can cause the user to recognize the maintenance method for reducing the power consumption of the designated household electrical appliance, and promote the user to perform the maintenance contributing to power saving of the household electrical appliance.

The notifying module 33A of the electronic apparatus 10A according to the embodiment causes the display module 12 to further display the operation screen that receives the operation on the household electrical appliance designated by a user by the touch operation on the display screen of the display module 12, for example. As a result, the user can simply operate the operation contributing to power saving of the household electrical appliances installed in other rooms different from the room in which the user is present while viewing the display screen of the display module 12, for example.

The display controller 32A of the electronic apparatus 10A according to the embodiment causes the display module 12 to display the first information in a display form from which the reduction of the power consumption can be recognized when the power consumption of the designated household electrical appliance has been reduced in accordance with the operation received by the operation screen of the display module 12. As a result, the user can intuitively recognize that the power consumption of the household electrical appliance installed in another room has been reduced by the operation through the operation screen, for example.

### Third embodiment

A third embodiment is described below. An electronic apparatus according to the third embodiment (hereinafter referred to as an electronic apparatus 10B) only differs from that of the first embodiment in that the notification methods such as the display forms of the first information and the second information, the operation method of the household electrical appliance, and the maintenance method of the household electrical appliance are changed in accordance with the attribute of a user (operator). In the following description, the same structures as those of the first embodiment are labeled with the same reference numerals. The duplicated description thereof is omitted and only the differences from the first embodiment are described.

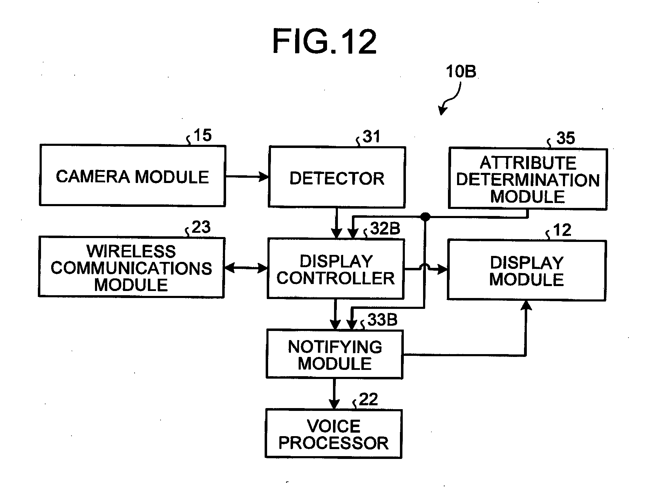

FIG. 12 is a block diagram illustrating a functional structure of the electronic apparatus 10B achieved by the CPU 16 of the electronic apparatus 10B according to the embodiment executing the power saving application. As illustrated in FIG. 12, the electronic apparatus 10B according to the embodiment differs from the electronic apparatus 10 according to the first embodiment in that the functional structure of the electronic apparatus 10B additionally comprises an attribute determination module 35, and comprises a display controller 32B instead of the display controller 32 of the first embodiment, and a notifying module 33B instead of the notifying module 33 of the first embodiment.

The attribute determination module 35 determines the attribute of a user who operates the electronic apparatus 10B according to the embodiment. Examples of the user's attribute include age groups (e.g., child, adult, and senior), genders, and nationalities.

The attribute determination module 35 may determine the user's attribute by various methods. A method is exemplified as follows. The login ID of a user and the user's attribute are stored in association with each other. When the user inputs the login ID into the electronic apparatus 10B according to the embodiment so as to use the electronic apparatus 10B, the user's attribute is determined based on the login ID. As another example, biological information such as user's fingerprints and the user's attribute may be stored in association with each other, and when the user touches the display screen of the display module 12, the biological information such as the user's fingerprints may be acquired, and the user's attribute may be determined based on the biological information. As still another example, features of a user's face and the user's attribute may be stored in association with each other and the user's attribute may be determined based on a face image obtained by imaging the user's face by the front camera of the camera module 15.

The display controller 32B causes the display module 12 to display the first information and the second information relating to the household electrical appliance detected by the detector 31 in the same manner as the display controller 32 of the first embodiment. The display controller 32B of the embodiment, however, changes the display forms of the first information and the second information when they are displayed on the display module 12 based on the user's attribute determined by the attribute determination module 35. Specifically, when the user's attribute determined by the attribute determination module 35 is senior, for example, the display controller 32B changes the size of characters of the first information and the second information to be displayed on the display module 12. For example, the size of the characters is changed to be larger than that used for a user whose attribute is adult. When the user's attribute determined by the attribute determination module 35 is child, for example, the display controller 32B changes the display form of the first information and the second information to be displayed on the display module 12 to a hiragana (Japanese syllabary characters) format or a graphic format. When the user's attribute determined by the attribute determination module 35 is female gender, for example, the display controller 32B causes the display module 12 to display the first information and the second information together with character icons. The display controller 32B changes the characters of the first information and the second information to be displayed on the display module 12 to those of the user's language based on the nationality of a user determined by the attribute determination module 35. Those examples described above are only part of the display forms to be changed based on the user's attribute. The display forms are not limited to those examples.

The notifying module 33B notifies a user of the operation method and the maintenance method for reducing the power consumption of the household electrical appliance detected by the detector 31 from the image, in the same manner as the notifying module 33 of the first embodiment. The notifying module 33B of the embodiment, however, changes notification methods of the operation method and the maintenance method of the household electrical appliance based on the user's attribute determined by the attribute determination module 35. Specifically, when the user's attribute determined by the attribute determination module 35 is senior, for example, the notifying module 33B changes the volume of the voice guidance output from the speakers 14 to be louder than that for a user whose attribute is adult. When the user's attribute determined by the attribute determination module 35 is senior or child, for example, the notifying module 33B notifies the user of the maintenance method of the household electrical appliance more in detail than in a case where the user's attribute is adult. The notifying module 33B changes the language used for the voice guidance output from the speakers 14 to the user's language based on the user's nationality determined by the attribute determination module 35. Those examples described above are only part of the notification methods to be changed based on the user's attribute. The notification methods are not limited to those examples.

As described above, the electronic apparatus 10B according to the embodiment further comprises the attribute determination module 35 that determines the attribute of a user who operates the electronic apparatus 10B. Based on the user's attribute determined by the attribute determination module 35, the display controller 32B changes the display forms of the first information and the second information when they are displayed on the display module 12, and the notifying module 33B changes the notification methods of the operation method and the maintenance method of the household electrical appliance. As a result, the electronic apparatus 10B according to the embodiment enables the user to confirm the information relating to the power consumption of the household electrical appliance more comprehensively and, can convey the operation method and the maintenance method contributing to power saving of the household electrical appliance to the user more comprehensibly.

According to at least one of the embodiments described above, the electronic apparatus 10 enables a user to confirm the information relating to the power consumption of the desired household electrical appliance in an intuitive and comprehensible manner by simply holding the electronic apparatus 10 over the desired household electrical appliance, with the detector 31 that detects the household electrical appliance from the image taken (input) by the camera module 15, and the display controller 32 that causes the display module 12 to display the first information indicating the power consumption of the household electrical appliance detected by the detector 31 from the image and the second information for determining whether the operation influencing the power consumption of the household electrical appliance needs to be performed.

The feature functions of the electronic apparatuses 10, 10A, and 10B according to the respective embodiments are achieved by the application program (power saving application) executed by the CPU 16, for example. The application program (power saving application) is preliminarily built in the non-volatile memory 20 included in each of the electronic apparatuses 10, 10A, and 10B, and supplied, for example. The application program (power saving application) may be recorded into a storage medium readable by a computer in a format installable in or a file executable by the computer, and provided. The examples of the storage medium include a compact disk ROM
(CD-ROM), a flexible disk (FD), a CD-recordable (CD-R), and a digital versatile disk (DVD). The application program (power saving application) may be stored in a computer coupled with a network such as the Internet, and be provided by being downloaded through the network. The application program (power saving application) may be provided or distributed through a network such as the Internet.

The application program (power saving application) executed by the respective electronic apparatuses 10, 10A, and 10B according to the respective embodiments has the module structures comprising the detector 31, the display controller 32 (32A, 32B), the notifying module 33 (33A, 33B), the identifier 34, and the attribute determination module 35. In actual hardware, the CPU 16 reads the application program (power saving application) from the non-volatile memory 20 and executes the application program. Once the program is executed, the above-described functional structure is loaded into a main memory (e.g., RAM 21), so that the functional structure is formed in the main memory.

Moreover, the various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions.

## Claims

1. An electronic apparatus (10) comprising:
an imaging module (15) configured to take an image;
a display (12) configured to display information;
a detector (31) configured to detect an electrical device from the image taken by the imaging module (15), wherein the electrical device is configured to consume power;
the electronic apparatus being **characterized in that** it further comprises:
a display controller (32) configured to control the display (12) to obtain and display first information, the first information including the current power consumption of the electrical device, and second information, the second information dependent on a type of the electrical device, for evaluating an operation influencing the power consumption of the electrical device.

2. The electronic apparatus (10) of Claim 1, further comprising a notifying module (33) configured to provide notification of an operation method for reducing the power consumption of the electrical device.

3. The electronic apparatus (10) of Claim 2, wherein the notifying module (33) is further configured to provide notification of a maintenance method for reducing the power consumption of the electrical device.

4. The electronic apparatus (10) of Claim 2 or 3, further comprising a determination module (35) configured to determine an attribute of an operator, wherein
the display controller (32) is configured to change a display form of the first information and the second information based on the attribute of the operator, and
the notifying module (33) is configured to change a notifying method based on the attribute of the operator.

5. The electronic apparatus (10) of any one of Claims 1 to 4, wherein the display controller (32) is configured to control the display (12) to further display an operation screen for receiving an operation to be performed on the electrical device after controlling the display (12) to display the first information and the second information.

6. The electronic apparatus (10) of Claim 5, wherein when the power consumption of the electrical device is reduced in accordance with the operation received with the operation screen, the display controller (32) is configured to control the display (12) to display the first information in a display form indicating a reduction in the power consumption.

7. The electronic apparatus (10) of Claim 1, wherein the display controller (32) is configured to control the display (12) to display the first information and the second information to be superimposed on the image taken by the imaging module (15).

8. The electronic apparatus (10) of Claim 1, further comprising an identifier (34) configured to identify another electrical device of a same type as the electrical device detected by the detector (31), wherein
the display controller (32) is configured to control the display (12) to display the first information and the second information for each of the electrical device detected by the detector (31) and the electrical device identified by the identifier (34) simultaneously on the display.

9. The electronic apparatus (10) of Claim 1, wherein
the detector (31) is further configured to detect an object from the image taken by the imaging module (15), whose state is manually changed without consuming power and the changed state of which influences the power consumption of the electrical device, and
the display controller (32) is configured to control the display (12) to display third information for determining whether a change in the state of the object is required when the detector (31) detects the object.

10. A computer program product having a non-transitory computer readable medium including programmed instructions, wherein the instructions, when executed by a computer, cause the computer to perform:
detecting an electrical device from the image taken by an imaging module (15), wherein the electrical device is configured to consume power; and
controlling a display (12) to obtain and display first information, the first information including the current power consumption of the electrical device, and second information, the second information dependent on a type of the electrical device, for evaluating an operation influencing the power consumption of the electrical device

## Patentansprüche

1. Elektronische Vorrichtung (10), aufweisend:
ein Abbildungsmodul (15), das konfiguriert ist, um ein Bild aufzunehmen;
eine Anzeige (12), die konfiguriert ist, um Informationen anzuzeigen;
einen Detektor (31), der konfiguriert ist, um eine elektrische Vorrichtung aus dem durch das Abbildungsmodul (15) aufgenommenen Bild zu erfassen, wobei die elektrische Vorrichtung konfiguriert ist, um Energie zu verbrauchen,
**gekennzeichnet durch**
eine Anzeigesteuerung (32), die konfiguriert ist, um die Anzeige (12) zu steuern, um erste Informationen, die den gegenwärtigen Energieverbrauch der elektrischen Vorrichtung umfassen, und zweite Informationen, die von einem Typ der elektrischen Vorrichtung abhängig sind, zu erhalten und anzuzeigen, um einen Betrieb zu beurteilen, der den Energieverbrauch der elektrischen Vorrichtung beeinflusst.

2. Elektronische Vorrichtung (10) nach Anspruch 1, ferner mit einem Benachrichtigungsmodul (33), das konfiguriert ist, um eine Benachrichtigung eines Betriebsverfahrens zum Reduzieren des Energieverbrauchs der elektrischen Vorrichtung bereitzustellen.

3. Elektronische Vorrichtung (10) nach Anspruch 2, wobei das Benachrichtigungsmodul (33) ferner konfiguriert ist, um eine Benachrichtigung eines Instandhaltungsverfahrens zum Reduzieren des Energieverbrauchs der elektrischen Vorrichtung bereitzustellen.

4. Elektronische Vorrichtung (10) nach Anspruch 2 oder 3, ferner mit einem Bestimmungsmodul (35), das konfiguriert ist, um ein Attribut eines Bedieners zu bestimmen, wobei
die Anzeigesteuerung (32) konfiguriert ist, um eine Anzeigeform der ersten Informationen und der zweiten Informationen basierend auf dem Attribut des Bedieners zu ändern, und
das Benachrichtigungsmodul (33) konfiguriert ist, um ein Benachrichtigungsverfahren basierend auf dem Attribut des Bedieners zu ändern.

5. Elektronische Vorrichtung (10) nach einem der Ansprüche 1 bis 4, wobei die Anzeigesteuerung (32) konfiguriert ist, um die Anzeige (12) zu steuern, um ferner einen Betriebsbildschirm zum Empfangen eines durchzuführenden Betriebs auf der elektrischen Vorrichtung anzuzeigen, nachdem die Anzeige (12) gesteuert worden ist, um die ersten Informationen und die zweiten Informationen anzuzeigen.

6. Elektronische Vorrichtung (10) nach Anspruch 5, wobei, wenn der Energieverbrauch der elektrischen Vorrichtung gemäß dem mit dem Betriebsbildschirm empfangenen Betrieb reduziert wird, die Anzeigesteuerung (32) konfiguriert ist, um die Anzeige (12) zu steuern, um die ersten Informationen in einer Anzeigeform darzustellen, die eine Reduzierung des Energieverbrauchs anzeigt.

7. Elektronische Vorrichtung (10) nach Anspruch 1, wobei die Anzeigesteuerung (32) konfiguriert ist, um die Anzeige (12) zu steuern, um die ersten Informationen und die zweiten Informationen, die auf dem durch das Abbildungsmodul (15) aufgenommene Bild zu überlagern sind, anzuzeigen.

8. Elektronische Vorrichtung (10) nach Anspruch 1, ferner mit einem Identifizierer (34), der konfiguriert ist, um eine andere elektrische Vorrichtung desselben Typs wie die durch den Detektor (31) erfasste elektrische Vorrichtung zu identifizieren, wobei
die Anzeigesteuerung (32) konfiguriert ist, um die Anzeige (12) zu steuern, um die ersten Informationen und die zweiten Informationen für jede der durch den Detektor (31) erfassten elektrischen Vorrichtung und der durch den Identifizierer (34) identifizierten elektrischen Vorrichtung auf der Anzeige simultan anzuzeigen.

9. Elektronische Vorrichtung (10) nach Anspruch 1, wobei
der Detektor (31) ferner konfiguriert ist, um ein Objekt aus dem durch das Abbildungsmodul (15) aufgenommenen Bild zu erfassen, dessen Zustand manuell geändert wird, ohne dass Energie verbraucht wird, und dessen geänderter Zustand den Energieverbrauch der elektrischen Vorrichtung beeinflusst,
und
die Anzeigesteuerung (32) konfiguriert ist, um die Anzeige (12) zu steuern, um dritte Informationen zum Bestimmen anzuzeigen, ob eine Änderung des Zustands des Objekts notwendig ist, wenn der Detektor (31) das Objekt erfasst.

10. Computerprogrammprodukt mit einem nicht-flüchtigen Computer-lesbaren Medium einschließlich programmierter Instruktionen, wobei die Instruktionen, wenn sie durch einen Computer ausgeführt werden, den Computer veranlassen, Folgendes durchzuführen:
Erfassen einer elektrischen Vorrichtung aus dem durch ein Abbildungsmodul (15) aufgenommenen Bild, wobei die elektrische Vorrichtung konfiguriert ist, um Energie zu verbrauchen; und
Steuern einer Anzeige (12), um erste Informationen, die den gegenwärtigen Energieverbrauch der elektrischen Vorrichtung umfassen, und zweite Informationen, die von einem Typ der elektrischen Vorrichtung abhängig sind, zu erhalten und anzuzeigen, um einen Betrieb zu beurteilen, der den Energieverbrauch der elektrischen Vorrichtung beeinflusst.

## Revendications

1. Appareil électronique (10) comprenant :
un module d'imagerie (15) configuré pour prendre une image ;
un dispositif d'affichage (12) configuré pour afficher des informations ;
un détecteur (31) configuré pour détecter un dispositif électrique d'après l'image prise par le module d'imagerie (15), dans lequel le dispositif électrique est configuré pour consommer de l'énergie ;
l'appareil électronique étant **caractérisé en ce qu'**il comprend en outre :
un contrôleur d'affichage (32) configuré pour commander le dispositif d'affichage (12) pour obtenir et afficher des premières informations, les premières informations incluant la consommation d'énergie en cours du dispositif électrique, et des deuxièmes informations, les deuxièmes informations dépendant du type de dispositif électrique, pour évaluer une opération ayant une influence sur la consommation d'énergie du dispositif électrique.

2. Appareil électronique (10) selon la revendication 1, comprenant en outre un module de notification (33) configuré pour fournir la notification d'un procédé de fonctionnement permettant de diminuer la consommation d'énergie du dispositif électrique.

3. Appareil électronique (10) selon la revendication 2, dans lequel le module de notification (33) est configuré en outre pour fournir la notification d'un procédé de maintenance permettant de diminuer la consommation d'énergie du dispositif électrique.

4. Appareil électronique (10) selon la revendication 2 ou 3, comprenant en outre un module de détermination (35) configuré pour déterminer un attribut d'un opérateur, dans lequel
le contrôleur d'affichage (32) est configuré pour modifier la forme d'affichage des premières informations et des deuxièmes informations en se basant sur l'attribut de l'opérateur, et
le module de notification (33) est configuré pour modifier le procédé de notification en se basant sur l'attribut de l'opérateur.

5. Appareil électronique (10) selon l'une quelconque des revendications 1 à 4, dans lequel le contrôleur d'affichage (32) est configuré pour commander au dispositif d'affichage (12) d'afficher en outre un écran d'opérations pour recevoir une opération destinée à être effectuée sur le dispositif électrique après avoir commandé au dispositif d'affichage (12) d'afficher les premières informations et les deuxièmes informations.

6. Appareil électronique (10) selon la revendication 5, dans lequel, lorsque la consommation d'énergie du dispositif électrique est réduite conformément à l'opération reçue avec l'écran d'opérations, le contrôleur d'affichage (32) est configuré pour commander au dispositif d'affichage (12) d'afficher les premières informations sous une forme d'affichage indiquant une diminution de la consommation d'énergie.

7. Appareil électronique (10) selon la revendication 1, dans lequel le contrôleur d'affichage (32) est configuré pour commander au dispositif d'affichage (12) d'afficher les premières informations et les deuxièmes informations pour les superposer à l'image prise par le module d'imagerie (15).

8. Appareil électronique (10) selon la revendication 1, comprenant en outre un dispositif d'identification (34) configuré pour identifier un autre dispositif électrique de même type en tant que dispositif électrique détecté par le détecteur (31), dans lequel
le contrôleur d'affichage (32) est configuré pour commander au dispositif d'affichage (12) d'afficher simultanément sur le dispositif d'affichage les premières informations et les deuxièmes informations pour chaque dispositif parmi le dispositif électrique détecté par le détecteur (31) et le dispositif électrique identifié par le dispositif d'identification (34).

9. Appareil électronique (10) selon la revendication 1, dans lequel
le détecteur (31) est configuré en outre pour détecter un objet d'après l'image prise par le module d'imagerie (15), dont l'état est modifié manuellement sans consommer d'énergie et dont l'état modifié a une influence sur la consommation d'énergie du dispositif électrique, et
le contrôleur d'affichage (32) est configuré pour commander au dispositif d'affichage (12) d'afficher des troisièmes informations pour déterminer si une modification de l'état de l'objet est requise lorsque le détecteur (31) détecte l'objet.

10. Produit de programme informatique comportant un support non transitoire lisible par un ordinateur incluant des instructions programmées, dans lequel les instructions, lorsqu'elles sont exécutées par un ordinateur, font effectuer par l'ordinateur :
la détection d'un dispositif électrique d'après l'image prise par un module d'imagerie (15), dans lequel le dispositif électrique est configuré pour consommer de l'énergie ; et
la commande d'un dispositif d'affichage (12) pour obtenir et afficher des premières informations, les premières informations incluant la consommation d'énergie en cours du dispositif électrique, et des deuxièmes informations, les deuxièmes informations dépendant du type de dispositif électrique, pour évaluer une opération ayant une influence sur la consommation d'énergie du dispositif électrique.
